# EUROPEAN PATENT SPECIFICATION

(11) **EP 3 547 758 B1**
(45) Date of publication and mention of the grant of the patent: **18.06.2025**
(21) Application number: 18795217.1
(22) Date of filing: 28.04.2018
(51) Int. Cl.: H04L 41/0803, H04W 48/10, H04L 12/28, H04W 48/16, H04W 84/12

(54) **HOME APPLIANCE NETWORK CONFIGURATION METHOD, HOME APPLIANCE, AND USER TERMINAL**
NETZWERKKONFIGURATIONSVERFAHREN FÜR HAUSHALTSGERÄTE, HAUSHALTSGERÄT UND BENUTZERENDGERÄT
PROCÉDÉ DE CONFIGURATION DE RÉSEAU POUR APPAREIL DOMESTIQUE, APPAREIL DOMESTIQUE ET TERMINAL UTILISATEUR

(30) Priority: 02.05.2017 CN 201710301913
(43) Date of publication of application: 02.10.2019
(73) Proprietor: Qingdao Haier Air Conditioner General Corp., Ltd., Qingdao, Shandong 266101 (CN)
(72) Inventor: CHEN, Dong, Qingdao Shandong 266101 (CN); CHENG, Yongfu, Qingdao Shandong 266101 (CN); ZHANG, Xiaofei, Qingdao Shandong 266101 (CN); LI, Pengan, Qingdao Shandong 266101 (CN)
(74) Representative: dompatent von Kreisler Selting Werner - Partnerschaft von Patent- und Rechtsanwälten mbB
(86) International application number: PCT/CN2018/085034
(87) International publication number: WO 2018/201998

(56) References cited:
- WO-A1-2016/078135
- CN-A- 103 533 608
- CN-A- 104 202 799
- CN-A- 104 486 762
- CN-A- 105 451 230
- CN-A- 105 991 380
- CN-A- 106 059 800
- CN-A- 107 071 863
- US-A1- 2016 156 614

## Description

### TECHNICAL FIELD

The present disclosure relates to the field of wireless network technologies, and in particular, to a network configuration method for home appliance, a home appliance, and a user terminal.

### BACKGROUND

With the development of Internet of Things, many home appliances tend to be intelligent. Different home appliances are connected and interworked on the basis of their own characteristics in combination with a technology of Internet of Things. With the support of cloud, data information of each home appliance may be used effectively. The development of mobile internet makes it possible for non-intelligent home appliances to be shown by means of applications of a mobile terminal. A user may observe running states of home appliances at any time anywhere by means of cloud and the mobile terminal. Currently, during the process of network configuration for home appliances, when a network configuration broadcast message is to be sent, it needs to carry and send home appliance information and Media Access Control (MAC) information in the network configuration broadcast message separately, which occupies more network resources and increases a network load.

CN104486762A discloses an access control method of an intelligent home appliance. The access control method comprises the following steps: an intelligent terminal receives hotspot information of the intelligent home appliance, wherein the intelligent home appliance is in a hotspot AP mode or a compatible mode, and the compatible mode is the co-existence mode of a workstation STA mode and the AP mode; the intelligent terminal receives login information inputted by a user; the intelligent terminal transmits the login information of a wireless local area network to the intelligent home appliance according to the hotspot information; the intelligent home appliance saves the login information and is accessed into a wireless network according to the login information and through relay equipment. According to the access control method, the intelligent home appliance is accessed into the wireless network according to the login information, so as to validate whether the wireless network is accessed or not according to the login information, therefore, the safety is high; the intelligent home appliance can save the login information inputted by the user, so that the saved login information is adjusted along with the change of the user; as the login information only is known by the user, the safety is high. The invention also discloses an intelligent home appliance system.

CN104202799A discloses that a method for accessing a wireless network by a WIFI smart apparatus with zero-configuration is provided. The WIFI smart apparatus is searched, configured and managed by a router. The router scans the wireless network, identifies the type of the apparatus according to an SSID of the WIFI smart apparatus given when the WIFI smart apparatus leaves the factory, and feeds a target apparatus to be added back to a user. After confirmed by the user, the router starts a WIFI STA, tries to be connected to the apparatus. If the connection is established, parameters such as the SSID, and passwords of the apparatus are transferred through an HTTP protocol. After the target apparatus receives a request and responds, the STA is activated to be connected to the router. After detecting the target apparatus is accessed, the router notifies the user. The user only needs to simply click and confirm on an APP without other additional input operations during the whole process. The APP can be supportive for various smart platforms, such as, Android, ios, and wp.

CN105991380A discloses a household appliance network access method, a router, and a household appliance. The household appliance network access method comprises the steps that the router determines the household appliance which can access a network, and the router sends the network information to the household appliance which can access a network such that the household appliance which can access a network establishes a connection with the router according to the network information. According to the method, the participation of a special device is not needed, thus the cost is reduced, and the operation convenience is improved.

CN106059800A discloses a network access configuration method and system based on intelligent household electric appliances. The method comprises: according to different categories, a cloud server establishing wifi hotspots of intelligent household electric appliances and IP addresses and access passwords corresponding to the wifi hotspots; an intelligent terminal obtaining the SSID name of the wifi hotspot of an intelligent household electric appliance; according to the SSID name of the wifi hotspot of an intelligent household electric appliance, downloading a corresponding access password and IP address from the cloud server, and the intelligent terminal connecting with the wifi hotspot of an intelligent household electric appliance; and the intelligent terminal sending obtained router parameters to the intelligent household electrical appliance, allowing the intelligent household electrical appliance to access to a network according to the router parameters. The method can improve the network access security and reliability of intelligent household electrical appliances, dynamically and flexibly configure the wifi hotspot SSID, password and IP address of intelligent household electric appliances, and reduce the possibility of connecting with an intelligent air conditioning hotspot by illegal users.

WO2016078135A1 discloses a method and system for a smart household appliance accessing a router. The method comprises: a working mode of a smart household appliance is set as an AP mode; an APPS is installed on a smart mobile terminal; the smart mobile terminal is connected to the smart household appliance; the APPS establishes a TCP connection with the smart household appliance; the smart household appliance searches for a WIFI network of a router and feeds back information to the APPS; the APPS displays a list and selects a router to be accessed; the APPS sends a relevant network configuration instruction to the smart household appliance to complete a configuration update operation of the smart household appliance so as to update the working mode of the smart household appliance as an STA mode, and stores information about the router to be accessed; the APPS automatically switches a WIFI hotspot network connected to the smart mobile terminal so as to connect the smart mobile terminal to the WIFI hotspot network of the router, and automatically searches for the smart household appliance accessing the router; and the APPS reminds a user of a successful operation of the smart household appliance accessing the router after finding the smart household appliance in access devices of the router.

### SUMMARY

Embodiments of the present invention provide a network configuration method for home appliance, so as to solve the problem in a related art that more network resources are occupied and a network load is increased since it needs to carry and send home appliance information and media access control (MAC) information in the network configuration broadcast message separately when the network configuration broadcast message is to be sent. The following presents a simplified summary of the claimed subject matter in order to provide a basic understanding of some aspects of the claimed subject matter. This summary is not an extensive overview of the claimed subject matter. It is intended to neither identify key or critical elements of the claimed subject matter nor delineate the scope of the claimed subject matter. Its sole purpose is to present some concepts of the claimed subject matter in a simplified form as a prelude to the more detailed description that is presented later. The invention is defined in the appended independent method claim 1.

The configuration information is a Service Set Identifier (SSID), containing the home appliance information and MAC information. In some optional embodiments, first 15 characters of the SSID carry the home appliance information; and last 7 characters of the SSID carry the MAC information.

The technical solution according to embodiments of the present invention has the following beneficial effects.

The home appliance transmits the SSID with the home appliance information and MAC information to the user terminal when sending a network configuration broadcast message, instead of carrying the home appliance information and MAC information, as two separate parameters, in the network configuration broadcast message. The user terminal may obtain the home appliance information and the MAC information of the home appliance by only identifying SSID.

The home appliance information and the MAC information are carried by the SSID, which reduces the occupation of network resources, lowers the network load and improves network operation efficiencies.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Figure 1 is a flow chart of a network configuration method for home appliance according to one exemplary embodiment;
Figure 2 is a flow chart of a network configuration method for home appliance according to one exemplary embodiment;
Figure 3 is a schematic diagram of a network configuration system for home appliance according to one exemplary embodiment; and
Figure 4 is a system schematic diagram of a network configuration method for home appliance according to one exemplary embodiment.

### DETAILED DESCRIPTION OF THE EMBODIMENTS

The description below and accompanying drawings fully illustrate specific embodiments of the invention, to enable one skilled in the art to implement the embodiments. Modifications, such as structural, logical, electrical and process modifications, can be made in other embodiments. The embodiments only represent some possible variations. Individual components or functions are optional and the operation order is variable, unless it is otherwise stated specifically. A part and certain feature of some embodiments may be included in or replaced by a part and certain feature of other embodiment. The scope of the embodiments of the invention includes the whole scope of the claims.

Herein, these embodiments of the invention may be individually or generally represented by the term "invention" for the sake of convenience; moreover, if more than one invention is disclosed actually, it is not intended automatically to limit the application scope to any individual invention or inventive concept. It should also be noted that the relationship terminologies such as "first", "second" and the like are only used herein to distinguish one entity or operation from another, rather than necessitate or imply that the actual relationship or order exists between the entities or operations. Furthermore, terms of "include", "comprise" or any other variants are intended to be non-exclusive. Therefore, a process, method, article or device including a plurality of components includes not only the listed components but also other components that are not enumerated, or, also include the components inherent for the process, method, article or device. Without other limitations, the component defined by the statement "comprising (including) one..." does not exclude the case that other similar components may exist in the process, method, article or device having the above component. The embodiments in the specification are described in a progressive manner. Each of the embodiments is mainly focused on describing its differences from other embodiments, and references may be made among these embodiments with respect to the same or similar portions among these embodiments. As for the device and product disclosed in the embodiment, since they correspond to the part disclosed in the embodiment, the description is relatively simple, and the relevant contents refer to the part of the explanation of the method.

The user terminal herein provides display and may be operated directly by a user, for example, an intelligent mobile phone, intelligent watch, PC machine, tablet PC, etc.; the home appliance herein refers to the one with a built-in wireless communication module, or the one interworking with an exclusive wireless communication module, including an intelligent air conditioner, intelligent TV, intelligent refrigerator, intelligent oven, etc. Certainly, the present invention is directed at the control over the home appliance in a home environment. However, rapid network configuration and control may also be performed on other non-home appliances in the similar control environment, such as various intelligent mechanical devices in a factory.

Currently, there is provided a network configuration method for home appliance. In this solution, by defining characters in SSID, the common information in the network configuration process for home appliance, i.e., the home appliance information and the MAC information, is carried by SSID.

The home appliance information, different from the MAC information, needs to be notified in the process of network configuration for home appliance, such as a home appliance identifier, home appliance type, machine code, home appliance brand, home appliance model, etc.

The MAC information refers to the one with a MAC address of the home appliance, and carries all or part of the MAC address of the home appliance.

In some exemplary embodiments, a network configuration method for home appliance, applied to home appliance side, includes:
sending configuration information of AP; where the configuration information carries home appliance information and MAC information.

Specifically, the configuration information is sent in the manner of broadcast, multicast or unicast.

Further, the configuration information includes SSID and a password (PWD); the configuration information may be carried by SSID or PWD.

If the home appliance information and the MAC information are carried by the PWD, such a fixed carrying method may cause the PWD to be broken easily. In addition, for the sake of network safety, the PWD is not constant usually, and should be amended frequently. Therefore, in the following embodiments, the SSID is used for carrying the home appliance information and the MAC information.

The SSID has two functions of representing an identifier of a subnetwork, which helps find the subnetwork, and carrying the home appliance information and the MAC information. It is assumed that the home appliance carries SSID in the form of broadcast by sending the network configuration broadcast message. The home appliance transmits the home appliance information and MAC information to the user terminal by carrying only SSID when sending a network configuration broadcast message, instead of carrying the home appliance information and MAC information, as two separate parameters, in the network configuration broadcast message. The user terminal may obtain the home appliance information and the MAC information of the home appliance by only identifying SSID. The home appliance information and the MAC information are carried by the configuration information, such as SSID, which reduces the occupation of network resources, lowers the network load and improves network operation efficiencies.

The SSID carries the home appliance information, including one or more information of home appliance identifier, home appliance type, machine code, home appliance brand and home appliance model; the MAC information carries all or part of the MAC address of the home appliance.

How to carry the home appliance information and the MAC information by the SSID will be explained below.

In some optional embodiments, the first 15 characters of the SSID carry the home appliance information; the last 7 characters of the SSID carry the MAC information.

Optionally, the home appliance information includes: a home appliance brand and a home appliance identifier.

Specifically, the SSID has such a format as home appliance brand-home appliance identifier-MAC information.

The "home appliance brand-home appliance identifier" has a length of 15 characters, and "-MAC information" has a length of 7 characters; for example, haier-ASI12BA98-xxxxxx.

Further, the home appliance brand and the home appliance identifier in the SSID are divided by an English punctuation "-"; the home appliance identifier and the MAC information are divided by the English punctuation "-". "haier" is the home appliance brand, "ASI12BA98" is the home appliance identifier, and "xxxxxx" is the last 6 characters of the MAC address.

Due to the relatively lengthy MAC address, all MAC address is carried in the SSID, which causes the problem of the lengthy SSID when the user terminal displays the SSID. Therefore, the length of the SSID is defined in the above-mentioned embodiments, and the preferable SSID structure and the information carried by different character positions in SSID are given in different embodiments.

By sending the SSID carrying the home appliance information and the MAC information, the home appliance enables the user terminal to obtain the home appliance information and the MAC information by analyzing the SSID while obtaining the SSID. In this way, the content of the parameter carried by the network configuration message sent by the home appliance is simplified, for example, the network configuration broadcast information. Additionally, the user terminal may obtain the home appliance information and the MAC information by only identifying such a parameter as SSID, which simplifies the identification flow and improves the identification speed.

The network configuration method for home appliance is applied to a user terminal side.

In some exemplary embodiments, a rapid network configuration method for home appliance includes:
receiving a broadcast which is sent by the home appliance and carries configuration information of a wireless access point AP; where the configuration information carries home appliance information and MAC information.

Specifically, the configuration information is sent in the manner of broadcast, multicast or unicast.

Further, the configuration information includes SSID and PWD; the configuration information may be carried by SSID or PWD.

If the home appliance information and the MAC information are carried by the PWD, the PWD may be broken easily. In addition, for the sake of network safety, the PWD is not constant usually, and should be amended frequently. Therefore, in the following embodiments, the SSID is used for carrying the home appliance information and the MAC information.

The SSID has two functions of representing an identifier of a subnetwork, which helps find the subnetwork, and carrying the home appliance information and the MAC information. The user terminal may obtain the home appliance information and the MAC information of the home appliance by only identifying SSID. The home appliance information and the MAC information are carried by the configuration information, such as SSID, which reduces the occupation of network resources, lowers the network load and improves network operation efficiencies.

The SSID carries the home appliance information, including one or more information of home appliance identifier, home appliance type, machine code, home appliance brand and home appliance model; the MAC information carries all or part of the MAC address of the home appliance.

The configuration information is a service set identifier (SSID), containing the home appliance information and MAC information.

In some optional embodiments, the first 15 characters of the SSID carry the home appliance information; the last 7 characters of the SSID carry the MAC information.

Optionally, the home appliance information includes: a home appliance brand and a home appliance identifier.

Specifically, the SSID has such a format as home appliance brand-home appliance identifier-MAC information.

The "home appliance brand-home appliance identifier" has a length of 15 characters, and "-MAC information" has a length of 7 characters; for example, haier-ASI12BA98-xxxxxx.

Further, the home appliance brand and the home appliance identifier in the SSID are divided by an English punctuation "-"; the home appliance identifier and the MAC information are divided by the English punctuation "-". "haier" is the home appliance brand, "ASI12BA98" is the home appliance identifier, and "xxxxxx" is the last 6 characters of the MAC address.

Due to the relatively lengthy MAC address, all MAC address is carried in the SSID, which causes the problem of the lengthy SSID when the user terminal displays the SSID. Therefore, the length of the SSID is defined in the above-mentioned embodiments, and the preferable SSID structure and the information carried by different character positions in SSID are given in different embodiments.

By sending the SSID carrying the home appliance information and the MAC information, the home appliance enables the user terminal to obtain the home appliance information and the MAC information by analyzing the SSID while obtaining the SSID. In this way, the content of the parameter carried by the network configuration message sent by the home appliance is simplified, for example, the network configuration broadcast information. Additionally, the user terminal may obtain the home appliance information and the MAC information by only identifying such a parameter as SSID, which simplifies the identification flow and improves the identification speed.

How to use the SSID carrying the home appliance information and the MAC information to implement rapid network configuration for home appliance will be explained below by embodiments.

The home appliance establishes an AP and broadcasts the configuration information of its AP through the wireless module. The user terminal obtains all surrounding home appliances which may establish AP through the wireless module by applications, and displays all the home appliances in the form of a list through an application interface to enable the user to select the home appliance to be connected and controlled. After the user selects a target home appliance at the application, the user terminal performs a rapid network configuration therewith according to the obtained configuration information of this target home appliance. After the target home appliance and the user terminal form a network successively, the target home appliance would report its operating state information to the user terminal, and the application at the user terminal would display a control interface correspondingly, so as for the user to control the target home appliance through this control interface directly. The application obtains and collectively displays the network configuration information of the home appliance. The user may not only know the information of the controllable home appliance by the application, but also form a network with the home appliance more conveniently, to perform corresponding control; when the user needs to control other home appliances, the connection with the current home appliance may be disconnected rapidly, and connection with the new target home appliance may be established directly.

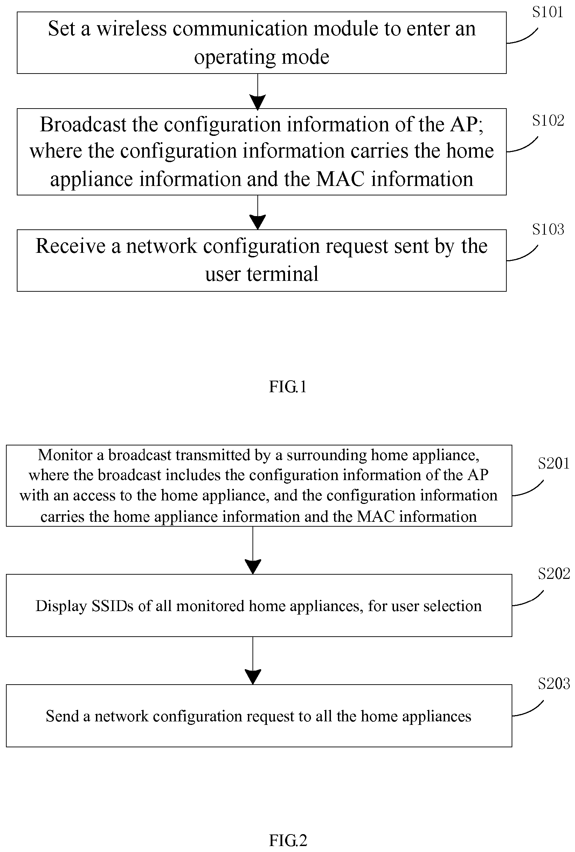

Figure 1 is a flow chart of a rapid network configuration network for home appliance according to the exemplary embodiments of the present invention.

In some exemplary embodiments, as shown in Figure 1, a rapid network configuration method for home appliance, applied to the home appliance end, includes the following steps.

In step S101, a wireless communication module is set to enter an operating mode.

Optionally, before the step S101, the method further includes an operation procedure of self-detection, i.e., detecting a connection of the home appliance with its wireless communication module to ensure a normal connection, which may be implemented by handshake communication based on the home appliance and the wireless communication module.

An alarm is triggered if it is detected that the home appliance is communicated with the wireless communication module abnormally. For example, an alarm is raised by a buzzer of the home appliance; optionally, after the alarm is triggered, an error code is fed back to a cloud server, so as to wait for a corresponding recovery service provided by the cloud server.

The method goes to the step S101 If it is detected that the communication between the home appliance and the wireless communication module is normal. In the step S101, the wireless communication module is set to be in the operating mode.

In step S102, the configuration information of the access AP is broadcasted; where the configuration information carries the home appliance information and the MAC information.

The provision of the home appliance information is to enable the user terminal to display the home appliance information for user selection. The home appliance information includes: home appliance brand, and home appliance type identifier; the MAC information may be part of the MAC address; optionally, the configuration information may also include a network access password; where the home appliance brand, the home appliance type identifier and the MAC information are sent by SSID, and the user terminal may obtain the above-mentioned information by analyzing the SSID.

The SSID has such a format as home appliance brand-home appliance identifier-MAC information.

Further, the SSID has a length of 22 characters. The "home appliance brand-home appliance identifier" has a length of 15 characters, and "-MAC information" has a length of 7 characters; for example, haier-ASI12BA98-xxxxxx. Further, the home appliance brand and the home appliance identifier in the SSID are divided by an English punctuation "-"; the home appliance identifier and the MAC information are divided by the English punctuation "-". The MAC information is the last 6 characters of the MAC address. Due to the relatively lengthy MAC address, all MAC address is carried in the SSID, which causes the problem of the lengthy SSID when the user terminal displays the SSID. Therefore, the length of the SSID is defined in the above-mentioned embodiments, and the preferable SSID structure and the information carried by different character positions in SSID are given in different embodiments.

In step S103, a network configuration request sent by the user terminal is received;
a network connection with the user terminal is established.

In some illustrative embodiments, after the network connection with the user terminal is established in step S103, the method further includes the following steps.

In step S104, operating state information is sent to the user terminal.

Specifically, the two parties report the current operating state at an regular interval, for example every five seconds, after the network connection. It is assumed that the home appliance is an air conditioner, the operating state to be reported may include: air conditioner operating mode, such as cooling/heating/humidifying/dehumidifying, wind speed, such as high/middle/low, wind direction, etc.; or, the two parties report the operating state information firstly after the network connection, and then feeds back the new operating state information to the user terminal in the case that there is a change in the operating state information.

In step S105, if a control instruction sent from the user terminal is received, according to the control instruction, the operating state is adjusted, and the adjusted operating state information is sent to the user terminal.

The user may adjust the operating state of the home appliance through the control interface displayed at the user terminal. After the operating state of the home appliance is adjusted according to the control instruction sent from the user terminal, the adjustment is fed back to the user terminal, to enable the user to know the adjustment result and the latest operating state of the home appliance in time.

Figure 2 is a flow chart of a rapid network configuration method for home appliance according to one exemplary embodiment.

In some exemplary embodiments, as shown in Figure 2, a rapid network configuration method for home appliances, applied to the user terminal, includes the following steps.

In step S201, a broadcast from the surrounding home appliance is monitored, including the configuration information of the AP with an access to the home appliance; where the configuration information carries the home appliance information and the MAC information; the home appliance information includes the home appliance brand and the home appliance type identifier; the MAC information is the last 6 characters of the MAC address; optionally, the configuration information may also include a network access password; the home appliance brand, the home appliance type identifier and the MAC address are sent by SSID, and the user terminal may obtain the above-mentioned information by analyzing the SSID.

The SSID has such a format as home appliance brand-home appliance identifier-MAC information.

Further, the SSID has a length of 22 characters. The "home appliance brand-home appliance identifier" has a length of 15 characters, and "-MAC information" has a length of 7 characters; for example, haier-ASI12BA98-xxxxxx. Further, the home appliance brand and the home appliance identifier in the SSID are divided by an English punctuation "-"; the home appliance identifier and the MAC information are divided by the English punctuation "-". The MAC information is the last 6 characters of the MAC address. Due to the relatively lengthy MAC address, all MAC address is carried in the SSID, which causes the problem of the lengthy SSID when the user terminal displays the SSID. Therefore, the length of the SSID is defined in the above-mentioned embodiments, and the preferable SSID structure and the information carried by different character positions in SSID are given in different embodiments.

In step S202, the SSIDs of all monitored home appliances are displayed, for user selection.

Optionally, the method further includes the step of screening the home appliances to be displayed according to the home appliance brand carried by SSID, to elect the home appliance according with the preset brand, and reject the home appliances with other brands; the type identifier of the home appliance of SSID is to enable the application to know and display the type of the home appliance, such as the air conditioner, washing machine, TV, etc.

When the user opens the application of the user terminal, the application may automatically search for all the home appliances in the surrounding environment. If the application finds a plurality of home appliances, these home appliances provide AP for connection; if during the use of the application, it is monitored that a new home application provides AP, the application may prompt the user to look for the new home appliance forwardly, and update the home appliance list to be selected by the user.

The user terminal may do a reverse lookup on the home appliance type at the cloud server or locally only according to the MAC address instead of according to the home appliance type identifier. Therefore, in the present embodiment, the home appliance type identifier is optional; but in practical operations, the type identifier of the home appliance corresponding to the MAC address is not entered and stored in advance, so usually, the type identifier of the home appliance is an essential parameter, and the application knows and displays the home appliance type based on this parameter.

In step S203, a network configuration request is sent to all the home appliances, to establish a network connection.

In some illustrative embodiments, after the network connection with a certain home appliance is established in step S203, the method further includes:
receiving operating state information sent by the home appliance;
displaying a control interface corresponding to the operating state information, the control interface for operating and controlling a certain home appliance;
sending a control instruction to a certain home appliance according to the user operation, such that the operating state of the certain home appliance is adjusted.

In the present embodiment, the control interfaces corresponding to different home appliances are stored locally or at a cloud server. The control interface calling procedure and solution are not repeated herein. It should be noted that no matter how the control interface is called or displayed, the control interface needs to display the current operating state information, such that the user knows the operating state of the home appliance, and performs control over the home appliance according to this operating state.

In some illustrative embodiments, after the network connection with the certain home appliance is established in step S203, the method further includes:
if a switch signal to another home appliance generated according to the user operation is received,
disconnecting the network connection with a certain home appliance;
according to a broadcast initiated by another home appliance, sending the network configuration request carrying the configuration information to the another home appliance and establishing the network connection.

The another home appliance is the one which is monitored among all home appliances, other than the certain home appliance.

In the application, a plurality of home appliances which provides AP and may be connected and controlled is displayed collectively. Therefore, when the user needs to control another home appliance, the user only needs to select the home appliance to be connected and controlled from the list. Once the user clicks other home appliances, the switch signal is generated. The application disconnects the current network connection with the original certain home appliance according to the switch signal, thereby triggering the flow of network connection with another home appliance. The network connection flow herein and the subsequent control process are similar to the above-mentioned flows, and are not repeated herein.

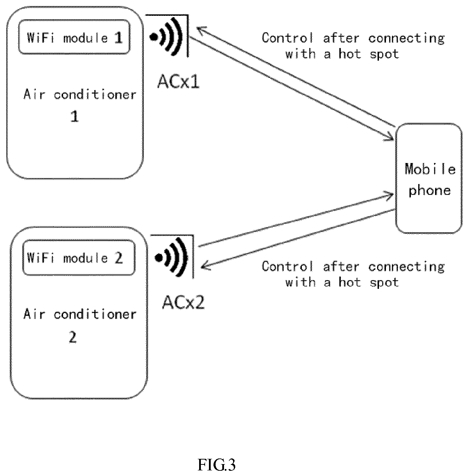

Figure 3 is a schematic diagram of a rapid network configuration system for home appliance, in which two home appliances (air conditioner 1 and 2) are included, each of which has a wireless communication module, and establishes AP through the wireless communication module; the mobile phone may monitor the AP broadcast initiated from the air conditioners 1 and 2, and display the condition (home appliance type, MAC address, etc) of the found air conditioners 1 and 2 to the user. The user may select the air conditioner to be connected through the mobile phone. The air conditioner reports its operating state information to the mobile phone. The mobile phone generates the corresponding control interface according to the home appliance type or operating state. The user not only knows the operating state of the home appliance from the mobile phone, but also controls the air conditioner through the control interface; and if there is a need to switch to the air conditioner 2 from the air conditioner 1, the user rapidly disconnects the connection with the air conditioner 1, and switches to the network where the air conditioner 2 is located in time.

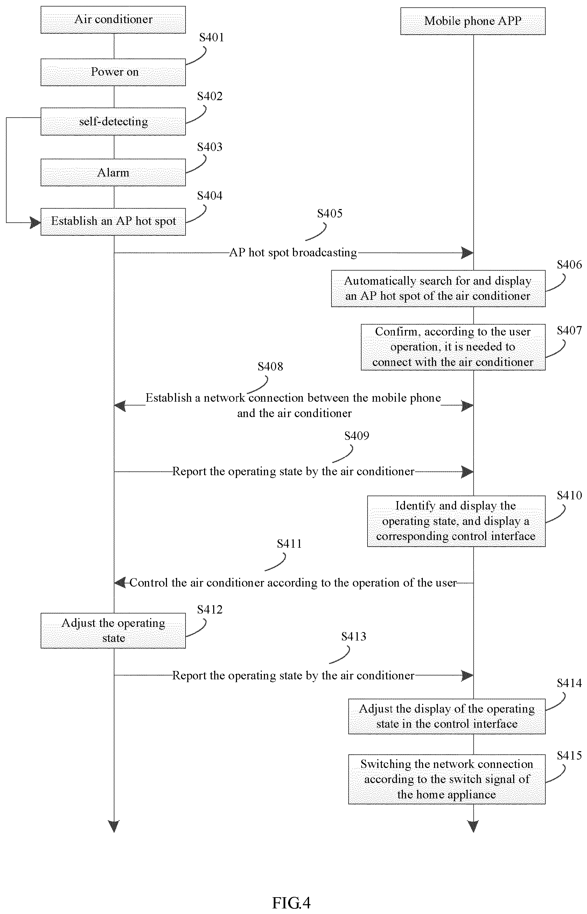

Figure 4 is a flow chart of device interaction in a rapid network configuration method for home appliance according to the present invention.

As shown in Figure 4, the method includes the following steps.

In step S401, the air conditioner is powered on.

In step S402, the air conditioner is self-detected, to detect whether the connection with the wireless communication module is normal.

The method goes to step S404 If it is detected that the connection with the wireless communication module is normal; otherwise, the method goes to the step S403.

In step S403, a buzzer of the air conditioner raises an audio alarm, to prompt the user to notice that the wireless communication module cannot enter the operating state.

In step S404, a wireless communication module of the air conditioner is set to enter an operating mode and establishes an AP.

In step S405, the air conditioner broadcasts the configuration information of the AP.

In step S406, after the application of the mobile phone is opened, the devices in the surrounding environment are searched for, and the air conditioner AP is found and the air conditioner information (such as air conditioner type, MAC address, etc.) is displayed.

In step S407, according to the user operation, it is confirmed that the network connection with the air conditioner is necessary.

If the user clicks the air conditioner by the application, it is considered that the user needs to connect with the air conditioner.

In step S408, the mobile phone establishes network connection with the air conditioner.

In this step, the mobile phone establishes a network connection with the air conditioner according to the configuration information carried in the broadcast of the air conditioner; in this network connection, the mobile phone is connected with the air conditioner directly, without a router, and is not influenced by the signal strength of the router.

In step S409, the air conditioner reports the operating state.

After the network connection between the two parties is successful, the air conditioner reports its operating state forwardly or according to the instruction of the mobile phone; the specific report content and manner may refer to the solution in the above-mentioned embodiment.

In step S410, the application of the mobile phone identifies and displays the operating state, and displays the control interface.

If the application of the mobile phone may identify the operating state of the air conditioner, the corresponding control interface is called.

In the control interface, the current operating state of the air conditioner is displayed; additionally, if there is a change in the operating state of the air conditioner and the change is reported to the mobile phone application, the operating state of the air conditioner in the control interface is updated in time.

In step S411, according to the operation of the user, the air conditioner is controlled.

The operation of the user on the control interface will trigger the mobile phone to give the corresponding control instruction to the air conditioner.

In step S412, the air conditioner adjusts the operating state after receiving the control instruction sent from the mobile phone.

In step S413, the air conditioner reports the adjusted operating state to the mobile phone.

In step S414, the application of the mobile phone adjusts the display of the operating state in the control interface.

Optionally, if there is a mapping relation between the control interface and the operating state of the home appliance (such as operating mode), in this step, according to the switch of the operating state (switch of the operating mode), the corresponding control interface is called and displayed.

In step S415, the mobile phone switches the network connection according to the switch signal of the home appliance.

The user may switch to the network where other home appliances are located through the application of the mobile phone, and implements the corresponding control; if the user selects other home appliances in the list displayed on the application of the mobile phone, the mobile phone disconnects the network connection with the air conditioner, and establishes the network connection with other home appliances corresponding to the switch signal of the home appliance. The process of establishing network connection is similar to the step S408, and the subsequent control process for the home appliance is also similar to the above-mentioned flow, and they are not repeated herein.

The present invention further provides a home appliance and a user terminal, other than a network configuration method for home appliance.

The home appliance information, different from the MAC information, needs to be notified in the process of network configuration for home appliance, such as a home appliance identifier, home appliance type, machine code, home appliance brand, home appliance model, etc.

The MAC information refers to the one with a MAC address of the home appliance, and carries all or part of the MAC address of the home appliance.

In some exemplary embodiments, a home appliance includes: a signal transmitter;
the signal transmitter, for sending configuration information of a wireless access point AP; where the configuration information carries home appliance information and MAC information.

Specifically, the configuration information is sent in the manner of broadcast, multicast or unicast.

Further, the configuration information includes SSID and PWD; the configuration information may be carried by SSID or PWD.

If the home appliance information and the MAC information are carried by the PWD, such a fixed carrying method may cause the PWD to be broken easily. In addition, for the sake of network safety, the PWD is not constant usually, and should be amended frequently. The SSID is used for carrying the home appliance information and the MAC information.

The SSID has two functions of representing an identifier of a subnetwork, which helps find the subnetwork, and carrying the home appliance information and the MAC information. It is assumed that the home appliance carries SSID in the form of broadcast by sending the network configuration broadcast message. The home appliance transmits the home appliance information and MAC information to the user terminal by carrying only SSID when sending a network configuration broadcast message, instead of carrying the home appliance information and MAC information, as two separate parameters, in the network configuration broadcast message. The user terminal may obtain the home appliance information and the MAC information of the home appliance by only identifying SSID. The home appliance information and the MAC information are carried by the configuration information, such as SSID, which reduces the occupation of network resources, lowers the network load and improves network operation efficiencies.

The configuration information is SSID, containing the home appliance information and MAC information.

In some optional embodiments, the first 15 characters of the SSID carry the home appliance information; the last 7 characters of the SSID carry the MAC information.

Optionally, the home appliance information includes: a home appliance brand and a home appliance identifier.

Specifically, the SSID has such a format as home appliance brand-home appliance identifier-MAC information.

SSID has a length of 22 characters. The "home appliance brand-home appliance identifier" has a length of 15 characters, and "-MAC information" has a length of 7 characters; for example, haier-ASI12BA98-xxxxxx.

Further, the home appliance brand and the home appliance identifier in the SSID are divided by an English punctuation "-"; the home appliance identifier and the MAC information are divided by the English punctuation "-". "haier" is the home appliance brand, "ASI12BA98" is the home appliance identifier, and "xxxxxx" is the last 6 characters of the MAC address.

Due to the relatively lengthy MAC address, all MAC address is carried in the SSID, which causes the problem of the lengthy SSID when the user terminal displays the SSID. Therefore, the length of the SSID is defined in the above-mentioned embodiments, and the preferable SSID structure and the information carried by different character positions in SSID are given in different embodiments.

By sending the SSID carrying the home appliance information and the MAC information, the home appliance enables the user terminal to obtain the home appliance information and the MAC information by analyzing the SSID while obtaining the SSID. In this way, the content of the parameter carried by the network configuration message sent by the home appliance is simplified, for example, the network configuration broadcast information. Additionally, the user terminal may obtain the home appliance information and the MAC information by only identifying such a parameter as SSID, which simplifies the identification flow and improves the identification speed.

The present invention further provides a user terminal, other than a network configuration method for home appliance.

In some exemplary embodiments, a user terminal includes: a signal receiver;
the signal receiver, for receiving a broadcast which is sent by the home appliance and carries configuration information of a wireless access point AP; where the configuration information carries home appliance information and MAC information.

Specifically, the configuration information is sent in the manner of broadcast, multicast or unicast.

If the home appliance information and the MAC information are carried by the PWD, the PWD may be broken easily. In addition, for the sake of network safety, the PWD is not constant usually, and should be amended frequently. Therefore, the SSID is used for carrying the home appliance information and the MAC information.

The SSID has two functions of representing an identifier of a subnetwork, which helps find the subnetwork, and carrying the home appliance information and the MAC information. The user terminal may obtain the home appliance information and the MAC information of the home appliance by only identifying SSID. The home appliance information and the MAC information are carried by the configuration information, such as SSID, which reduces the occupation of network resources, lowers the network load and improves network operation efficiencies.

The SSID carries the home appliance information, including one or more information of home appliance identifier, home appliance type, machine code, home appliance brand and home appliance model; the MAC information carries all or part of the MAC address of the home appliance.

The configuration information is a service set identifier (SSID), containing the home appliance information and MAC information.

In some optional embodiments, the first 15 characters of the SSID carry the home appliance information; the last 7 characters of the SSID carry the MAC information.

Optionally, the home appliance information includes: a home appliance brand and a home appliance identifier.

Specifically, the SSID has such a format as home appliance brand-home appliance identifier-MAC information.

SSID has a length of 22 characters. The "home appliance brand-home appliance identifier" has a length of 15 characters, and "-MAC information" has a length of 7 characters; for example, haier-ASI12BA98-xxxxxx.

Further, the home appliance brand and the home appliance identifier in the SSID are divided by an English punctuation "-"; the home appliance identifier and the MAC information are divided by the English punctuation "-". "haier" is the home appliance brand, "ASI12BA98" is the home appliance identifier, and "xxxxxx" is the last 6 characters of the MAC address.

Due to the relatively lengthy MAC address, all MAC address is carried in the SSID, which causes the problem of the lengthy SSID when the user terminal displays the SSID. Therefore, the length of the SSID is defined in the above-mentioned embodiments, and the preferable SSID structure and the information carried by different character positions in SSID are given in different embodiments.

By sending the SSID carrying the home appliance information and the MAC information, the home appliance enables the user terminal to obtain the home appliance information and the MAC information by analyzing the SSID while obtaining the SSID. In this way, the content of the parameter carried by the network configuration message sent by the home appliance is simplified, for example, the network configuration broadcast information. Additionally, the user terminal may obtain the home appliance information and the MAC information by only identifying such a parameter as SSID, which simplifies the identification flow and improves the identification speed.

It may be appreciated that the present disclosure is not limited to the flow and structure that have been described above and illustrated in the accompanying drawings, and that various modifications and changes can be made without departing from the scope thereof. It is intended that the scope of the disclosure only be limited by the appended claims.

## Claims

1. A network connection method for a home appliance, comprising:
broadcasting (S102, S405) a configuration information of a wireless Access Point AP by the home appliance; wherein the configuration information carries home appliance information and Media Access Control MAC information, wherein the wireless AP is established by a wireless communication module of the home appliance; **characterized by** further comprising:
monitoring (S201, S406) a broadcast sent by the home appliance and including the configuration information of the wireless AP by a user terminal, so that wireless AP is found and the home appliance information is displayed at the user terminal;
according to a user operation, confirming (S407) that the network connection with the home appliance is necessary;
establishing (S408) a network connection between the user terminal and the home appliance directly without a router;
wherein the configuration information is a Service Set Identifier SSID, containing the home appliance information and MAC information, wherein the SSID carries the home appliance information, including one or more information of home appliance identifier, home appliance type, machine code, home appliance brand and home appliance model.

2. The method according to claim 1, wherein first 15 characters of the SSID carry the home appliance information; and last 7 characters of the SSID carry the MAC information.

## Patentansprüche

1. Netzwerkverbindungsverfahren für ein Haushaltsgerät, das umfasst:
Broadcasten (S102, S405) einer Konfigurationsinformation eines Wirless Access Point, AP, mittels des Haushaltsgeräts, wobei die Konfigurationsinformation Haushaltsgeräteinformationen und Media-Access-Control-, MAC, Informationen trägt, wobei der Wireless AP durch ein drahtloses Kommunikationsmodul des Haushaltsgeräts geschaffen wird;
**dadurch gekennzeichnet, dass** das Verfahren ferner umfasst:
Überwachen (S201, S406) eines Broadcast, der von dem Haushaltsgerät gesendet wird und die Konfigurationsinformation des Wireless AP umfasst, mittels eines Benutzerendgeräts, so dass der Wireless AP gefunden wird und die Haushaltsgeräteinformationen auf dem Benutzerendgerät angezeigt werden;
Bestätigen (S407), entsprechend eines Bedienungsvorgangs, dass die Netzwerkverbindung mit dem Haushaltsgerät erforderlich ist;
direktes Herstellen (S408) einer Netzwerkverbindung zwischen dem Benutzerendgerät und dem Haushaltsgerät ohne einen Router;
wobei die Konfigurationsinformation eine Service Set Identifier, SSID, ist, welche die Haushaltsgeräteinformationen und die MAC-Informationen enthält, wobei die SSID die Haushaltsgeräteinformationen trägt, die eine oder mehrere Informationen aus der Haushaltsgerätekennung, dem Haushaltsgerätetyp, Maschinencode, der Haushaltsgerätemarke, und dem Haushaltsgerätemodell umfassen.

2. Verfahren nach Anspruch 1, wobei die ersten 15 Zeichen der SSID die Haushaltsgeräteinformationen tragen, und wobei die letzten 7 Zeichen der SSID die MAC-Informationen tragen.

## Revendications

1. Procédé de connexion réseau pour un appareil électroménager, comprenant :
la diffusion (S102, S405) des informations de configuration d'un point d'accès AP sans fil par l'appareil électroménager ; dans lequel les informations de configuration contiennent des informations sur l'appareil électroménager et des informations de contrôle d'accès au support MAC, dans lequel l'AP sans fil est établi par un module de communication sans fil de l'appareil électroménager ; **caractérisé en ce qu'**il comprend en outre :
la surveillance (S201, S406) d'une diffusion envoyée par l'appareil électroménager et incluant les informations de configuration de l'AP sans fil par un terminal utilisateur, de sorte que l'AP sans fil soit trouvé et que les informations de l'appareil électroménager soient affichées sur le terminal utilisateur ;
selon une opération utilisateur, la confirmation (S407) que la connexion réseau avec l'appareil électroménager est nécessaire ;
l'établissement (S408) d'une connexion réseau entre le terminal utilisateur et l'appareil électroménager directement, sans routeur ;
dans lequel les informations de configuration sont un SSID (identifiant d'ensemble de services), contenant les informations sur l'appareil électroménager et les informations MAC, dans lequel le SSID contient les informations sur l'appareil électroménager, incluant une ou plusieurs informations sur l'identifiant de l'appareil électroménager, le type d'appareil électroménager, le code machine, la marque de l'appareil électroménager et le modèle de l'appareil électroménager.

2. Procédé selon la revendication 1, dans lequel les 15 premiers caractères du SSID contiennent les informations sur l'appareil ; et les 7 derniers caractères contiennent les informations MAC.
